# EUROPEAN PATENT APPLICATION

(11) **EP 4 464 542 A1**
(43) Date of publication of application: **20.11.2024**
(21) Application number: 23173678.6
(22) Date of filing: 16.05.2023
(51) Int. Cl.: B60L 53/30

(54) **WALL MOUNTABLE BACKPLATE FOR SECURING AN ELECTRIC VEHICLE SERVICE EQUIPMENT (EVSE), METHOD OF INSTALLING AN EVSE, WALL BOX FOR CHARGING AN ELECTRIC VEHICLE AND AN ELECTRIC VEHICLE CHARGING SYSTEM**

(71) Applicant: ABB E-mobility B.V., 2629 JG Delft (NL)
(72) Inventor: WEI, Vincent-Cong, Shanghai, 210018 (CN); QI, Yushan, 2497CN Den Haag (NL); CHEN, Pan, Shanghai, 201315 (CN)
(74) Representative: Zimmermann & Partner Patentanwälte mbB

(57) **Abstract**

A wall mountable backplate (10) for securing an electro vehicle service equipment, EVSE (20), to a wall is described. The wall mountable backplate includes a housing (11) having one or more openings (12) for guiding one or more cables (30) into the housing. The housing (11) is configured for receiving an electrical connector (13) having a plurality of electrical contacts (131) for connecting a plurality of corresponding electrical contacts (21) of the EVSE (20). The housing (11) has one or more positioning elements (14) for mating with corresponding positioning elements (22) of the EVSE (20). Further, the housing (11) has one or more mounting elements (15) for either mounting a front cover (30) for providing an enclosed environmentally protected interior volume or mounting the EVSE (20) to the housing.

## Description

### TECHNICAL FIELD

Embodiments of the present disclosure relate to electric vehicle charging equipment (EVSE), particularly wall mountable backplates for securing an EVSE. Further embodiments of the present disclosure relate to a method of installing an EVSE, a wall box for charging an electric vehicle and an electric vehicle charging system.

### BACKGROUND

Electric and hybrid-electric vehicles are an alternative mode of transport to petrol and diesel engine vehicles. These vehicles use an electric motor as a main or an auxiliary driving mechanism, and incorporate a rechargeable battery to power the electric motor. Recent advancements in electric vehicle technology have led to electric vehicles with increased range and speed, which has contributed to an increase in the popularity of electric vehicle ownership. As an increased number of vehicle manufacturers begin to produce electric vehicles, electric vehicle ownership appears set to become commonplace.

Electric vehicles are generally recharged by connecting the electric vehicle to a specialized charging apparatus (which may be referred to as a charging station or a charging point), which includes a charging connector which couples with a charging port on the vehicle and delivers power to recharge the vehicle's battery. The charging stations generally draw electricity from the main power grid, and are therefore provided in locations electrically connected to the main power grid. For example, electric vehicle charging stations may be provided at service stations, shopping or leisure venues, or may be provided at the user's home. Electric vehicle recharging is currently much slower than refilling a petrol or diesel vehicle with fuel, and may require a user to recharge their electric vehicle for a long time, for example overnight.

Currently, the installation of EVSE is not always required immediately when constructing new parking lots or residential areas. As electrical fire or damage may be caused to an EVSE in case of loose or faulty wiring, usually an EVSE is installed by an experienced electrical engineer, which may incur additional costs for charge point operators (CPOs).

Accordingly, in view of the above, there is a demand for improved electric vehicle charging devices and systems which at least partially overcome some of the problems of the state of the art. In particular, there is a demand for providing improved solutions for installing electrical access points and cables in advance in order to reduce the costs and time associated with installing EVSE in the future.

### SUMMARY

In light of the above, a wall mountable backplate for securing an electric vehicle service equipment (EVSE) to a wall, a method of installing an EVSE, and a wall box for charging an electric vehicle according to the independent claims are provided. Further aspects, advantages, and features are apparent from the dependent claims, the description, and the accompanying drawings.

According to an aspect of the present disclosure, a wall mountable backplate for securing an electric vehicle service equipment, EVSE, to a wall is provided. The wall mountable backplate includes a housing having one or more openings for guiding one or more cables into the housing. The housing is configured for receiving an electrical connector having a plurality of electrical contacts for connecting a plurality of corresponding electrical contacts of the EVSE. Additionally, the housing has one or more positioning elements for mating with corresponding positioning elements of the EVSE. Further, the housing has one or more mounting elements for either mounting a front cover for providing an enclosed environmentally protected interior volume or mounting the EVSE to the housing.

Accordingly, beneficially a wall mountable backplate for securing an EVSE is provided which is improved compared to the state of the art. In particular, the wall mountable backplate according to embodiments of the present disclosure is beneficially provides for the possibility to provide an electrical access point that is configured to facilitate the safe and efficient installation of EVSE in the future. Further, the wall mountable backplate as described herein has the advantage that an easy two-step installation can be employed. In particular, the backplate as described herein is beneficially configured to function as pre-implemented electrical access point which can be connected to a power distribution cabinet by a cable and fixed to the wall by an experienced electrical engineer first. Later, the EVSE can be safely installed by the user himself.

According to another aspect of the present disclosure, a method of installing an EVSE is provided. The method includes mounting a wall mountable backplate according any of the embodiments described herein to a wall. Further, the method includes securing the EVSE to the wall mountable backplate.

According to a further aspect of the present disclosure, a wall box for charging an electric vehicle is provided. The wall box includes an EVSE secured to a wall mountable backplate according to any of embodiments described herein. The EVSE is electrically connected to an electrical connector arranged in the housing of the wall mountable backplate via a plurality of plug-in contacts.

According to yet a further aspect of the present disclosure, an electric vehicle charging system is provided. The electric vehicle charging system is connected to a power cabinet configured to provide power to the EVSE for operating the EVSE and charging the electric vehicle.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- Fig. 1: shows a schematic perspective front view of a wall mountable backplate according to embodiments described herein;
- Fig. 2: shows a schematic perspective back view of an EVSE according to embodiments described herein;
- Fig. 3: shows a schematic front view of a front cover according to embodiments described herein;
- Figs. 4A-4C: show block diagrams for illustrating a method of installing an EVSE (20) according to embodiments described herein;
- Fig. 5: shows a block diagram illustrating the process to register and recall installation information according to embodiments described herein;
- Fig. 6: shows a wall box for charging an electric vehicle according to embodiments described herein; and
- Fig. 7: shows an electric vehicle charging system according to embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

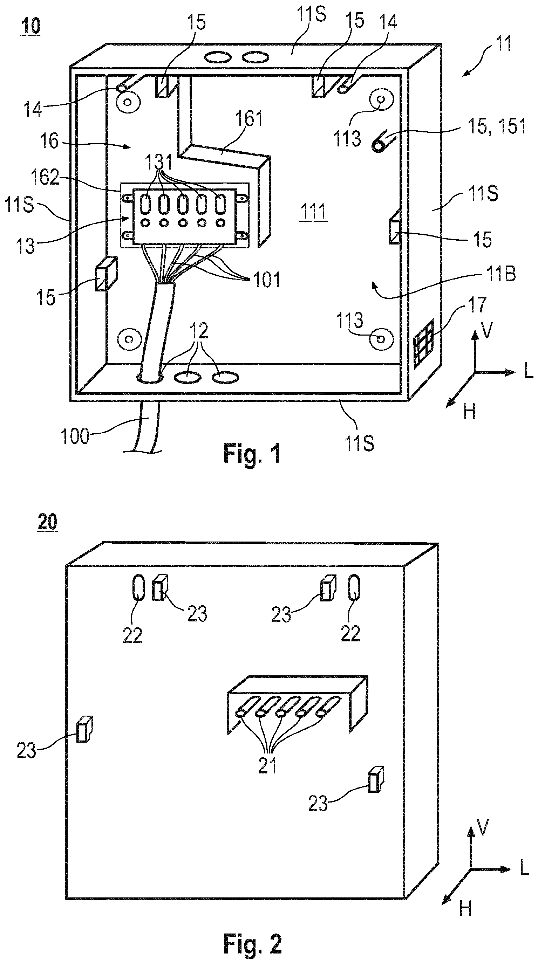

With exemplary reference to Fig. 1, a wall mountable backplate 10 for securing an electric vehicle service equipment, EVSE 20, to a wall according to the embodiments of the present disclosure is described. According to embodiments, which can be combined with other embodiments described herein, the wall mountable backplate includes a housing 11 having one or more openings 12 for guiding one or more cables 100 into the housing. The housing 11 is configured for receiving an electrical connector 13 having a plurality of electrical contacts 131 for connecting a plurality of corresponding electrical contacts 21 of the EVSE 20. The housing 11 has one or more positioning elements 14 for mating with corresponding positioning elements 22 of the EVSE 20. Further, the housing 11 has one or more mounting elements 15 for either mounting a front cover 30 for providing an enclosed environmentally protected interior volume or mounting the EVSE 20 to the housing 11.

Before various further embodiments of the present disclosure are described in more detail, some aspects with respect to some terms used herein are explained.

Generally, an electric vehicle supply equipment, EVSE, may also referred to as electric vehicle charging station, EV charging station, electric recharging point, charging point or charge point. In the present disclosure, the EVSE can be understood as an element in an infrastructure that supplies electric energy for the recharging of electric vehicles.

In the present disclosure, a wall mountable backplate can be understood as a mounting platform for an EVSE that need to be securely attached to a wall or any other vertical surface. In other words, the wall mountable backplate can be understood as a sturdy base onto which the EVSE can be secured. Typically, the wall mountable backplate is made of durable materials, such as metal and/or plastic.

In the present disclosure, a housing of the wall mountable backplate can be understood as an outer casing or enclosure having a back wall 11B and a plurality of side walls 11S, as exemplarily shown in Fig. 1. The back wall 11B of the housing is configured to be mountable to a wall or any other vertical surface. Typically, the back wall 11B includes a plurality of mounting holes 113 for receiving a mounting elements, such as screws, for mounting the back plate 10 to a wall. In particular, as exemplarily shown in Fig. 1, the mounting holes 113 may be provided in the corner regions of the back wall 11B. For instance, the mounting holes 113 can be configured for fixing the backplate 10 to a wall by four screws, e.g. M6 screws.

Further, typically the side walls 11S of the housing 11 extend away from a front side 111 of the backwall 11B. In particular, the extension of the side walls 11S away from the backwall 11B is typically larger than the extension the of the electrical connector 13 way from the backwall 11B, as exemplarily shown in Fig. 1, such that the electrical connector 13 can be arranged within the housing 11.

In the present disclosure, an electrical connector having a plurality of electrical contacts can be understood as a device that is configured to provide a secure and reliable electrical connection between two or more wires or conductors. In particular, the electrical connector contains a certain number of individual conductive elements, referred to as electrical contacts, which are configured to mate with other corresponding contacts, particularly of the EVSE as described herein.

In the present disclosure, the expression "one or more positioning elements of the housing for mating with corresponding positioning elements of the EVSE" can be understood in that the housing includes one ore more devices or components which are configured to ensure that the EVSE and the housing are correctly aligned or positioned relative to each other when they are connected or mated together. For example, the positioning elements 14 of the housing 11 can be protruding features, particularly horizontally protruding features, e.g. positioning posts or pins, as exemplarily shown in Fig. 1. The corresponding positioning elements 22 of the EVSE 20 can be recesses, notches or holes, particularly vertically extending elongated recesses, notches or holes, as exemplarily shown in Fig. 2. The vertical direction V, the horizontal direction H and the lateral direction L are indicated in Figs. 1, 2, 3 and 6. It is to be understood that the positioning elements 14 of the housing 11 and the corresponding positioning elements 22 of the EVSE 20 are arranged and configured such that they fit into each other.

In the present disclosure, the expression "one or more mounting elements for either mounting a front cover for providing an enclosed environmentally protected interior volume or mounting the EVSE to the housing" can be understood in that the one or more mounting elements are configured to allow the front cover to be securely mounted as well as to allow the EVSE to be securely mounted. Accordingly, the one or more mounting elements provide for flexible installation options, i.e. mounting a front cover or an EVSE. Accordingly, it is to be understood that typically the EVSE and the front cover include one or more corresponding mounting elements for mating with the one or more mounting elements of the housing.

The term "enclosed environmentally protected interior volume" can be understood as a space that is enclosed and protected from environmental factors such as dust and/or moisture and/or temperature fluctuations. In particular, the enclosed environmentally protected interior volume refers to the space inside the housing 11 of the wall mountable backplate 10 where the electrical connector 13 is located. The front cover 30 can be mounted onto the housing using the mounting elements 15, creating a fully enclosed and sealed environment that protects the electrical connector from exposure to environmental factors.

With exemplary reference to Fig. 1, according to embodiments, which can be combined with other embodiments described herein, the housing 11 includes a compartment 16 for the electrical connector 13. In the present disclosure, a compartment for the electrical connector can be understood as a separate section within the housing of the backplate which is configured for receiving the electrical connector. In particular, the compartment 16 is provided by a space between a compartment wall 161 and a side wall 11S of the housing 11. As exemplarily shown in Fig. 1, the compartment wall 161 extends from a front side 111 of a backwall 11B of the housing 11 into the interior volume of the housing 11. Typically, the compartment is open at the side at which wires 101 are to be connected to the electrical connector 13.

As exemplarily shown in Fig. 1, the front side 111 of the backwall 11B may include a recess 162 for the electrical connector 13. It is to be understood that the recess 162 is typically provided at the front side 111 of the backwall 11B within the compartment 16. Further, it is to be understood that the electrical connector 13 can be attached to the front side 111 of the backwall 11B, particularly within the recess 162. For example, a position of the electrical connector 13 within the housing 11, particularly within the compartment 16, more particularly within the recess 162, can be fixed by appropriate fixation elements.

According to embodiments, which can be combined with other embodiments described herein, the one or more openings 12 for guiding the one or more cables 100 into the housing are provided in one or more sidewalls 11S of the housing 11. Typically, a cables 100 includes a plurality of wires 101. Fig. 1 shows an example of a cable with 100 with five wires 101.

It is to be understood that the number of wire and the number of the plurality of electrical contacts 131 may vary depending on type of charger, e.g. a three-phase charger and a single-phase charger. Three-phase chargers require five terminal blocks for electrical connections: three phase lines, one neutral line, and a ground wire (often called "PE" for "protective earth"). Single-phase chargers only require three terminal blocks: one phase line, one neutral line, and a ground wire.

According to embodiments, which can be combined with other embodiments described herein, the one or more positioning elements 14 of the housing are positioning posts or pins, as exemplarily shown in Fig. 1. As an example, Fig. 1 shows two positioning elements 14 extending towards the front. Further as exemplarily shown in Fig. 1, typically the one or more positioning elements 14 are provided in an upper portion of the housing 11. For example, the one or more positioning elements 14 may extend from an upper side wall 11S of the housing 11 towards the front. It is to be understood that typically the one or more positioning elements 14 extend substantially perpendicular to the backwall 11B of housing 11. Accordingly, when the wall mountable backplate 10 is mounted to a wall, typically the one or more positioning elements 14 of the housing extend substantially horizontally.

With exemplarily reference to Fig. 2, according to embodiments, which can be combined with other embodiments described herein, the corresponding positioning elements 22 of the EVSE 20 are positioning recesses, notches, or holes. In particular, the positioning recesses, notches or holes may have an elongated shape, particularly extending in the vertical direction.

It is to be understood that alternatively, the one or more positioning elements 14 of the housing can be positioning recesses, notches, or holes, and the corresponding positioning elements 22 of the EVSE 20 can be positioning posts or pins.

According to embodiments, which can be combined with other embodiments described herein, the one or more mounting elements 15 of the housing 11 include one or more elements of the group consisting of: one or more snap-in elements configured for mating with one or more corresponding snap-in elements of the front cover 30, one or more snap-in elements configured for mating with one or more corresponding snap-in elements of the of the EVSE 20, and one or more internal threads 151 for mating with one or more screws, particularly one or more anti-theft screws. As an example, the mounting elements 15 provided on the housing 11 shown in Fig. 1 are female mounting elements and the corresponding mounting elements 23 provided on the EVSE are male mounting elements. It is to be understood that the terms "male" and "female" are used to describe that mounting elements as described herein are complementary components, where the male component typically has a protrusion or extension that fits into a corresponding recess or socket in the female component, for creating a secure and stable connection.

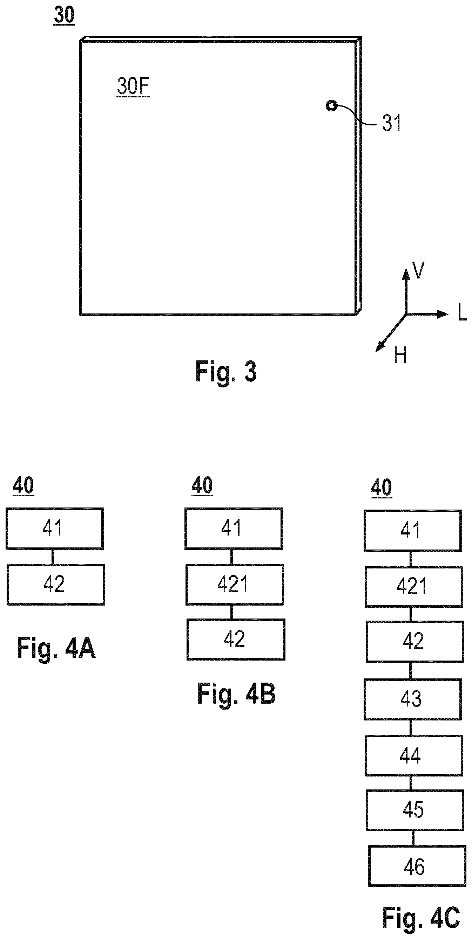

Fig. 3 shows a schematic front view of a front cover 30 which can be mounted on the front side of the housing 11 for providing an enclosed environmentally protected interior volume as described herein. As exemplarily shown in Fig. 3, typically the front side 30F of the front cover includes a hole 31 for receiving a securing element, such as an anti-theft screw. It is to be understood that typically the hole 31 in the front cover 30 is positioned in alignment with the internal thread 151 of the housing 11.

Accordingly, after the early-stage installation of the backplate 10, i.e. when the backplate is fixed to a wall and the connector 13 is arranged within the housing 11 and connected to a power distribution cabinet by a cable 100, the front cover 30 can be fixed to the backplate 10, for instance by a M5 anti-theft screw, to prevent the backplate from dust and water and avoid the risk of electric shock.

At a later-stage installation, the front cover 30 can be removed and instead the EVSE can be installed, i.e. connected to the backplate 10 mounted to the wall. Compared to the state of the art, embodiments of the present disclosure beneficially provide for an easier EVSE installation. In particular, for the installation, first, the positioning holes on the EVSE are aligned with the positioning posts on the backplate. Then, the EVSE is pushed horizontally towards the backplate. Thereafter, the EVSE is pressed down vertically, typically by approximately 4 mm and the EVSE is fixed to the backplate. Thereby, the electrical contacts 21 of the EVSE, which may also be referred to as conductive posts, are fixed to the electrical contacts 131 of the electrical connector 13 on the backplate 10. The electrical contacts 131 of the electrical connector 13 may also be referred to as card slots. Typically, when the electrical contacts 21 of the EVSE 20 are connected with the electrical contacts 131 of the connector 13, the EVSE is powered on automatically.

According to embodiments, which can be combined with other embodiments described herein, the wall mountable backplate includes a QR code 17 for registering installation information of the wall mountable backplate. In particular, the QR code can be provided on an outer side of a sidewall 11S of the housing 11, as exemplary shown in Fig. 1. However, it is to be understood that the QR code can be provided at any suitable location on the housing 11.

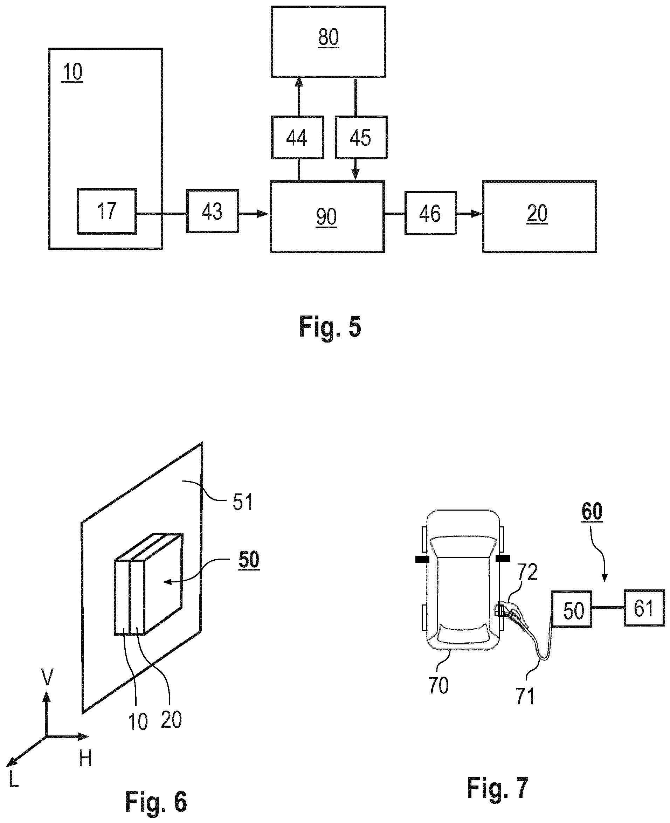

With exemplary reference to the block diagrams shown in Figs. 4A to 4C and 5, embodiments of a method 40 of installing an EVSE 20 according to the present disclosure are described. According to embodiments, which can be combined with other embodiments described herein, the method includes mounting (represented by block 41 in Figs. 4A to 4C) a wall mountable backplate 10 according any of the embodiments described herein to a wall. Additionally, the method 40 includes securing (represented by block 42 in Figs. 4A to 4C) the EVSE 20 to the wall mountable backplate 10.

According to embodiments, which can be combined with other embodiments described herein, the method 40 may include removing (represented by block 421 in Figs. 4B and 4C) a front cover 30 prior to securing the EVSE 20 to the wall mountable backplate 10.

According to embodiments, which can be combined with other embodiments described herein, the method 40 includes scanning (represented by block 43 in Fig. 4C and 5) an QR code 17 provided on the wall mountable backplate 10. The QR contains identification information of the backplate 10. Further, the method 40 may include registering (represented by block 44 in Fig. 4C and 5) installation information of the wall mountable backplate provided by the QR code to a back-end server 80. Typically, scanning and registering is conducted by using a mobile app 90, particularly a smart phone app.

According to embodiments, which can be combined with other embodiments described herein, the method includes downloading (represented by block 45 in Fig. 4C and 5) the installation information from the back-end server and configuring (represented by block 46 in Fig. 4C and 5) the EVSE according to the installation information. Configuring the EVSE may be carried out automatically and may be conducted by using the mobile app 90. Typically, for downloading the installation information the QR code on the backplate and a bar code on the EVSE is scanned, e.g. via the mobile app.

According to embodiments, which can be combined with other embodiments described herein, configuring the EVSE may include using a cloning mode. For instance, to facilitate the commissioning of sites with multiple EVSEs that need to have the same configuration, the EVSE can have a cloning functionality. In particular, after completing the configuration of the first EVSE, the installer will be able to activate or deactivate cloning functionality, e.g. by long pressing a hardware button provided on the EVSE, particularly on a side of the EVSE. The configured EVSE can then communicate its configuration settings to other EVSEs that send a request for receiving the configuration settings.

When an EVSE is put in cloning mode, first the EVSE will check if it has a valid configuration. If this is the case, the EVSE will send a multicast message over a local network, requesting if there is already another EVSE present that is acting as a configuration source. If the EVSE which sent the multicast message does not receive a message from another configuration source, the EVSE will take up the role as configuration source. If another configuration source does reply, the EVSE which sent the multicast message will indicate an error to the installer, e.g. by a flashing LED and/or beeping. In the case of an error, the EVSE will not enter the cloning mode. Typically, a configuration source will remain in this mode for a preset amount of time, or until the installer manually ends it. After each configuration data request which the configuration source EVSE receives from an unconfigured EVSE, this timer (i.e. the preset amount of time of the cloning mode) will be reset. Typically, a leaving of the cloning mode is announced by an audible and/or visible signal, e.g. with a single short beep.

Unconfigured EVSEs that are put in cloning mode will send out a request over the local network looking for configuration sources. If another EVSE has already been put in configuration source mode, it will respond to this request by sending its configuration settings to the unconfigured EVSE. The unconfigured EVSE will install these configuration settings and confirm the successful configuration, e.g. with an audible and/or visible signal, for instance a single short beep, and leave cloning mode. If there is no configuration source present on the network, the unconfigured EVSE will start listening for an EVSE announcing itself as configuration source. Once this happens the unconfigured EVSE will send out a new request to this configuration source. If no configuration source presents itself within a preset amount of time, the EVSE will leave cloning mode and signal failure to the installer, e.g. with a long beep.

Accordingly, as exemplarily shown in Fig. 5, the process to register and recall installation information can be as follows. At an early-stage installation, the installer may scan the QR code 17 on the backplate 10 and open a website and register the installation information via the mobile app 90. The installation information can be stored on the back-end server 80. At a later-stage, when the EVSE 20 is fixed to the backplate 10 and powered on, the installer may scan the QR code 17 on the backplate 10 to download the installation information via the mobile app 90. Then the app 90 can configure the EVSE 20 in accordance with the downloaded installation information.

With exemplary reference to Fig. 6, a wall box 50 for charging an electric vehicle is described. The wall box 50 includes an EVSE 20 secured to a wall mountable backplate 10 according to any embodiments described herein. The wall mountable backplate 10 is mounted to a wall 51. The EVSE 20 is electrically connected to an electrical connector 13 via a plurality of plug-in connections. The plurality of plug-in connections are provided by a connection of the plurality of electrical contacts 131 of the electrical connector 13, as exemplarily shown in Fig. 1, with the plurality of corresponding electrical contacts 21 of the EVSE 20, as exemplarily shown in Fig. 2. It is to be understood that the plug-in connections are arranged within the housing 11 of the wall mountable backplate 10.

For instance, the plurality of electrical contacts 131 of the electrical connector 13 can be female contacts and the plurality of corresponding electrical contacts 21 of the EVSE can be male contacts, as exemplarily shown in Figs 1 and 2. Alternatively, the plurality of electrical contacts 131 of the electrical connector 13 may be male contacts and the plurality of corresponding electrical contacts 21 of the EVSE may be female contacts. Typically, the female contacts are elongated such that when the male contacts are inserted the male contacts can be moved along the elongated direction of the female contacts up to a stop to establish the connection of the female contacts and the male contacts.

With exemplary reference to Fig. 7, an electric vehicle charging system 60 is described. The electric vehicle charging system 60 includes a wallbox 50 according to any embodiments described herein. The wall box is connected to a power cabinet 61 configured to provide power to the EVSE for operating the EVSE and charging an electric vehicle 70. As exemplarily shown in Fig. 7, typically a charging gun 72 is connected to the wallbox 50 via charging cable 71.

In view of the embodiments described herein, it is to be understood that compared to the state of the art an improved installation of an EVSE is provided. In particular, embodiments described herein beneficially provide for a two-step installation scheme solution, which is characterized in that fixing the EVSE to the backplate is so easy that even an end user can do the job himself. The backplate is configured for providing a pre-implemented electrical access point. The backplate is connected to the power distribution cabinet and fixed to the wall by an experienced electrical engineer at early stage. The experienced electrical engineer may scan the QR code on the backplate and register the installation information for the backplate to the back-end server via a mobile app. In order to prevent the backplate from dust and water, and avoid the risk of electric shock, a front cover can be installed after the early-stage installation. At the later stage, in order to install the EVSE, the front cover is removed first, then the EVSE can be fixed to the backplate and powered on. Then installer, e.g. the end user, can scan the QR code on the backplate and the bar code on the EVSE via a mobile app and the installation information will be downloaded from the back-end server and configured to the EVSE automatically.

While the foregoing is directed to embodiments, other and further embodiments may be devised without departing from the basic scope, and the scope is determined by the claims that follow.

### REFERENCE NUMBERS

- 10: wall mountable backplate
- 11: housing
- 11B: backwall of housing
- 11S: sidewalls of housing
- 100: one or more cables
- 101: wires
- 111: front side of backwall
- 112: back side of backwall
- 113: mounting holes
- 12: one or more openings
- 13: electrical connector
- 131: plurality of electrical contacts
- 14: one or more positioning elements
- 15: one or more mounting elements
- 151: internal thread
- 16: compartment
- 161: compartment wall
- 162: recess for electrical connector
- 17: QR code
- 20: electro vehicle service equipment EVSE
- 21: plurality of corresponding electrical contacts
- 22: corresponding positioning elements
- 23: corresponding mounting elements
- 30: front cover
- 30F: front side of front cover
- 31: hole for a securing element
- 40: method of installing an EVSE
- 41-46: blocks of block diagram for illustrating the method of installing an EVSE
- 50: wallbox
- 51: wall
- 60: electric vehicle charging system
- 61: power cabinet
- 70: electric vehicle
- 71: charging cable
- 72: charging gun
- 80: back-end server
- 90: mobile app

## Claims

1. A wall mountable backplate (10) for securing an electric vehicle service equipment, EVSE (20), to a wall, the wall mountable backplate comprising
a housing (11) having one or more openings (12) for guiding one or more cables (100) into the housing,
wherein the housing (11) is configured for receiving an electrical connector (13) having a plurality of electrical contacts (131) for connecting a plurality of corresponding electrical contacts (21) of the EVSE (20),
wherein the housing (11) has one or more positioning elements (14) for mating with corresponding positioning elements (22) of the EVSE (20),
and wherein the housing (11) has one or more mounting elements (15) for either mounting a front cover (30) for providing an enclosed environmentally protected interior volume or mounting the EVSE (20) to the housing.

2. The wall mountable backplate (10) of claim 1, wherein the housing (11) comprises a compartment (16) for the electrical connector (13), particularly the compartment (16) is provided by a space between a compartment wall (161) and a side wall (11S) of the housing (11), the compartment wall (161) extending from a front side (111) of a backwall (11B) of the housing (11) into the interior volume of the housing (11).

3. The wall mountable backplate (10) of claim 1 or 2, wherein the one or more openings (12) for guiding the one or more cables (100) into the housing are provided in one or more sidewalls (1 1S) of the housing (11).

4. The wall mountable backplate (10) of any of claims 1 to 3, wherein the one or more positioning elements (14) of the housing are positioning posts or pins, and wherein the corresponding positioning elements (22) of the EVSE (20) are positioning recesses, notches, or holes, or vice versa.

5. The wall mountable backplate (10) of any of claims 1 to 3, wherein the one or more mounting elements (15) of the housing (11) comprise one or more of the group consisting of: one or more snap-in elements configured for mating with one or more corresponding snap-in elements of the front cover (30) and/or of the EVSE (20), one or more internal threads (151) for mating with one or more screws, particularly one or more anti-theft screws.

6. The wall mountable backplate (10) of any of claims 1 to 5, wherein the wall mountable backplate comprises a QR code for registering installation information of the wall mountable backplate, particularly the QR code being provided on an outer side of the sidewalls (11S) of the housing (11).

7. A method of installing an EVSE (20), comprising:
- mounting a wall mountable backplate (10) according any of claims 1 to 6 to a wall, and
- securing the EVSE (20) to the wall mountable backplate (10).

8. The method of claim 7, further comprising removing a front cover (30) prior to securing the EVSE (20) to the wall mountable backplate (10).

9. The method of claim 7 or 8, further comprising scanning an QR code provided on the wall mountable backplate and registering installation information of the wall mountable backplate provided by the QR code to a back-end server, particularly via a mobile app.

10. The method of claim 9, further comprising downloading the installation information from the back-end server and configuring the EVSE according to the installation information, particularly by using the mobile app, particularly wherein configuring the EVSE includes using a cloning mode.

11. A wall box (50) for charging an electric vehicle, comprising an EVSE (20) secured to a wall mountable backplate (10) according to any of claims 1 to 6, wherein the EVSE is electrically connected to an electrical connector (13) arranged in the housing (11) via a plurality of plug-in connections.

12. The wall box of claim 11, wherein the plurality of plug-in connections are provided by a plurality of male contact provided on a backside of the EVSE and a plurality of female contacts of the electrical connector (13).

13. An electric vehicle charging system (60), comprising a wallbox according to claim 11 or 12, the wall box being connected to a power cabinet configured to provide power to the EVSE for operating the EVSE and charging the electric vehicle.
